Europäisches Patentamt

European Patent Office

Office européen des brevets

(11) Numéro de publication: **0 477 851 A2**

## DEMANDE DE BREVET EUROPEEN

(21) Numéro de dépôt: **91116225.3**

(22) Date de dépôt: **24.09.91**

(51) Int. Cl.5: **G01F 23/24**

(30) Priorité: **25.09.90 FR 9011798**

(43) Date de publication de la demande:
**01.04.92 Bulletin 92/14**

(84) Etats contractants désignés:
**AT BE CH DE DK ES FR GB GR IT LI LU NL SE**

(71) Demandeur: **ALCATEL CIT**
**12 Rue de la Baume**
**F-75008 Paris(FR)**

(72) Inventeur: **Morel, Thierry**
**22 Chemin de la Colline**
**F-74940 Annecy le Vieux(FR)**

(74) Mandataire: **Weinmiller, Jürgen et al**
**Lennéstrasse 9 Postfach 24**
**W-8133 Feldafing(DE)**

(54) Montage électrique pour élaborer un signal électrique fonction de la déperdition calorifique d'un élément résistif et applications dudit montage.

(57) La présente invention concerne un montage électrique pour élaborer un signal électrique analogique, fonction de la déperdition calorifique d'un élément résistif (3), caractérisé en ce que ledit élément résistif (3) est monté dans un pont de de Wheatstone (4) alimenté dans une des ses diagonales par l'intermédiaire d'un transistor (10) dont la base (11) est reliée à la sortie d'un amplificateur (12) à grand gain qui a ses entrées (13, 14) reliées à l'autre diagonale (15, 16) du pont (4), ledit pont comportant un potentiomètre de réglage (17), la tension d'émetteur (30) dudit transistor (10) alimentant le pont et constituant ledit signal.

L'invention peut s'appliquer à la mesure du niveau d'un liquide (2) dans une enceinte (1), l'élément résistif (3) étant de forme allongée et disposé verticalement dans l'enceinte.

FIG. 2

La présente invention concerne un montage électrique pour élaborer un signal électrique fonction de la déperdition calorifique d'un élément résistif.

L'invention s'applique à la mesure du niveau d'un liquide, à la mesure d'un débit d'un fluide etc...

Elle trouve une application particulière, par exemple, dans la surveillance à distance du niveau d'huile dans la cuve d'une pompe à palettes.

Le document DE 2455 198 décrit un dispositif pour détecter le passage au-dessous d'un niveau donné de l'huile d'un moteur de véhicule. Cependant, le dispositif décrit fonctionne comme un simple comparateur et ne peut délivrer qu'un signal en tout ou rien.

La présente invention a pour but de proposer un dispositif qui fournit un signal analogique et qui soit d'une conception simple, de faible coût, ayant un faible encombrement, et pouvant fonctionner dans une gamme de température allant de 0 à 100° C.

L'invention a ainsi pour objet un montage électrique pour élaborer un signal électrique analogique, fonction de la déperdition calorifique d'un élément résistif, caractérisé en ce que ledit élément résistif est monté dans un pont de Wheatstone alimenté dans une de ses diagonales par l'intermédiaire d'un transistor dont la base est reliée à la sortie d'un amplificateur à grand gain qui a ses entrées reliées à l'autre diagonale du pont, ledit pont comportant un potentiomètre de réglage, la tension d'émetteur dudit transistor alimentant le pont et constituant ledit signal.

L'invention a aussi pour objet un dispositif de mesure continue du niveau d'un liquide dans une enceinte mettant en application le montage ci-dessus, caractérisé en ce que ledit élément résistif est de forme allongée et est disposé verticalement dans ladite enceinte, le niveau maximal du liquide dans l'enceinte ne dépassant pas l'extrémité supérieure dudit élément.

Avantageusement, une sonde de température est disposée à proximité dudit élément résistif et fournit une tension proportionnelle à sa température qui est envoyée, ainsi que la tension de l'émetteur dudit transistor sur un additionneur pour effectuer une compensation d'une dérive éventuelle de température.

L'invention a aussi pour objet un dispositif pour délivrer un signal binaire indiquant qu'un liquide dans une enceinte atteint ou dépasse un niveau déterminé ou ne l'atteint pas, mettant en application le montage électrique ci-dessus, caractérisé en ce que ledit élément résistif est placé horizontalement dans ladite enceinte à un niveau déterminé, et en ce que ladite tension d'émetteur dudit transistor est comparée à un seuil dans un comparateur fournissant en sortie ledit signal binaire.

Avantageusement, une sonde de température est disposée à proximité dudit élément résistif et fournit une tension proportionnelle à sa température, qui est envoyée, ainsi que la tension de l'émetteur dudit transistor, sur un additionneur pour effectuer un compensation d'une dérive éventuellement de température, la sortie dudit additionneur étant envoyée vers ledit comparateur.

L'invention a encore pour objet un dispositif de mesure du débit d'un fluide dans une conduite, mettant en application le montage électrique ci-dessus caractérisé en ce que ledit élément résistif est disposé dans la veine fluide.

Avantageusement, une sonde de température est disposée à proximité dudit élément résistif et fournit une tension proportionnelle à sa température qui est envoyée, ainsi que la tension de l'émetteur dudit transistor, sur un additionneur pour effectuer une compensation d'une dérive éventuelle de température.

L'invention va maintenant être décrite en se référant au dessin annexé dans lequel;

La figure 1 représente le montage électrique selon l'invention.

La figure 2 représente un dispositif de mesure de niveau appliquant le montage de la figure 1.

La figure 3 représente un dispositif voisin de celui de la figure 2 mais indiquant seulement que le liquide atteint ou n'atteint pas un niveau minimal.

La figure 4 est un schéma montrant l'application du montage de la figure 1 à la mesure d'un débit.

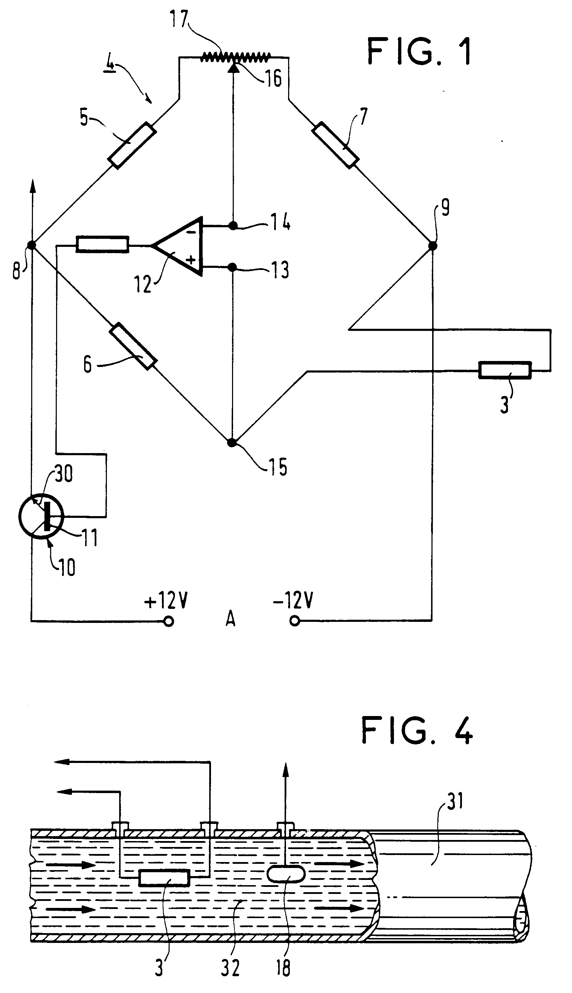

En se référant à la figure 1, on voit un élément résistif 3, tel qu'une résistance à coefficient de température négatif, monté dans une branche d'un pont de Wheatstone 4 comprenant, dans les autres branches, des résistances 5, 6 et 7. Il est alimenté dans sa diagonale 8, 9 par une alimentation continue A, par l'intermédiaire d'un transistor 10 dont l'émetteur 30 est relié au point 8. La base 11 du transistor est reliée à la sortie d'un amplificateur à grand gain 12 dont les entrées 13 et 14 sont reliées à l'autre diagonale, repérée 15, 16, du pont de Wheatstone.
Pour le réglage du pont 4, on utilise un potentiomètre 17 dont le curseur constitue justement le point 16 de la diagonale du pont.

Un tel montage fonctionne en régulateur de la température de la thermistance 3.

A partir du point de réglage-effectué au moyen du potentiomètre 17 de façon à obtenir, pour une condition déterminée d'échange thermique entre la thermistance 3 et son environnement, une tension déterminée sur l'émetteur 30 du transistor 10 c'est-à-dire au point 8-si une modification survient dans l'environnement thermique du capteur, il y aura modification d'échange thermique entre la thermistance 3 et son environnement. Le montage va réagir en retrouvant un nouveau point de fonctionnement, (tension au point 8) différent de celui correspondant au réglage initial, de façon que l'équilibre de l'ensemble soit assuré.

Ainsi, si le capteur tend à être refroidi, le montage réagit aussitôt en le réchauffant, tout se passe comme si la température de la thermistance 3 était régulée. Entre temps, la tension de sortie (point 8) a évoluée selon une fonction continue de la déperdition calorifique de la thermistance.

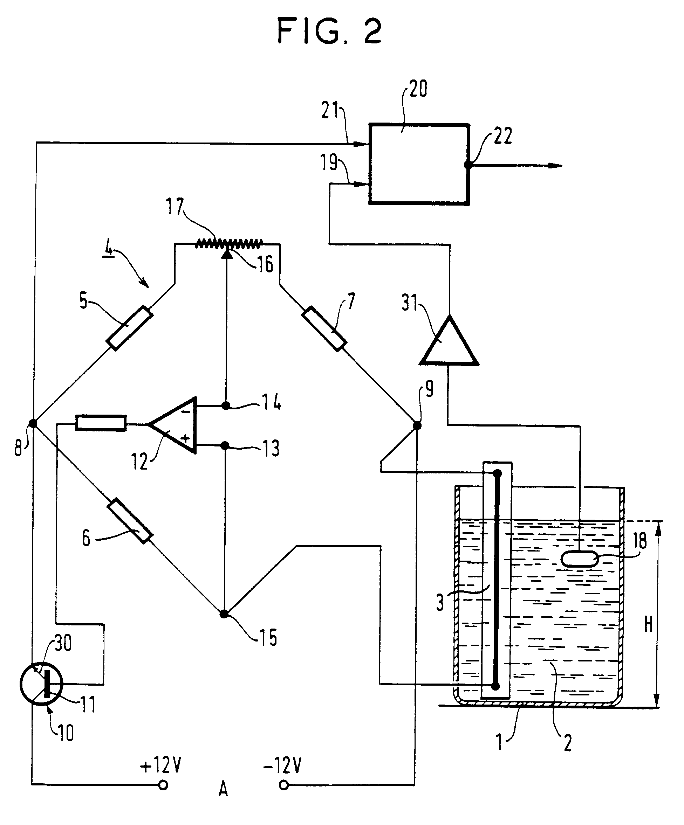

La figure 2 représente un dispositif de mesure du niveau H d'un liquide 2 dans un récipient 1, appliquant le montage de la figure 1.

A cet effet, la thermistance 3 est de forme allongée et disposée verticalement. Bien entendu, le niveau maximal du liquide ne dépasse jamais l'extrémité supérieure de l'élément résistif 3.

Le fonctionnement est le suivant :

Par le potentiomètre 17 et pour une alimentation A entre + 12 volts et - 12 volts, on effectue le réglage de façon à obtenir par exemple + 2,5 volts sur l'émetteur 30 du transistor 10. Ce réglage s'effectue, par exemple, lorsque le détecteur-résistance 3 est entièrement dans l'air et à température ambiante de l'ordre de 18 - 20°C.

Lorsque le niveau du liquide 2 monte, l'effet du liquide environnant va être de mieux évacuer la chaleur dissipé par la résistance 3. Ainsi, si elle est à coefficient de température négatif, sa valeur de résistance va augmenter, et la tension entre les points 13 et 14 va augmenter. Il en résulte une augmentation de la tension de sortie de l'amplificateur 12, donc de la tension d'émetteur 30 du transistor 10. Cette tension d'émetteur 30 est celle qui alimente le pont en 8. Les autres résistances du pont : 5, 6 et 7 et le potentiomètre 17 étant choisis de faible dérive en température, cette augmentation de tension au point 8 agit essentiellement sur la résistance 3 qui, étant plus chauffée, voit sa résistance diminuer, compensant ainsi l'effet précédent. On atteint ainsi un nouvel équilibre du pont de Wheatstone 4 et le montage se stabilise avec une tension au point 8 différente de la tension qui existait en ce point lorsque le niveau du liquide 2 était plus bas.

C'est cette variation de tension au point 8 qui est significative du niveau du liquide.

Cependant, afin de tenir compte d'une éventuelle variation de la température du milieu ambiant, lorsque par exemple le dispositif n'est pas situé dans un lieu thermostaté, il y a lieu d'ajouter un dispositif de compensation pour tenir compte de ces variations ambiantes.

A cet effet, une sonde de température 18 qui fournit une tension V = kθ, avec θ la température de la sonde et k une constante linéaire, est reliée à une entrée 19 d'un circuit additionneur 20, dont une autre entrée 21 est reliée au point 8, c'est-à-dire à la tension d'alimentation du pont par l'émetteur 30 du transistor 10.

La sonde 18 est disposée à proximité du détecteur 3, de préférence dans le liquide 2.

La sortie 22 du circuit additionneur 20 fournit alors un signal dont la tension est une fonction continue de la hauteur H du niveau liquide et ce signal est alors indépendant des variations des conditions ambiantes.

La tension fournie par la sonde 18, à la sortie de l'amplificateur 31 est une tension antagoniste de l'évolution de la tension qui se manifeste lors d'une dérive en température de l'élément résistif 3.

Dans le cas où le liquide 2 est un liquide conducteur, l'élément résistif 3 doit être isolé thermiquement. Si le liquide est corrosif, l'élément 3 doit être isolé du liquide par une enveloppe ou un moulage de protection dans un matériau approprié.

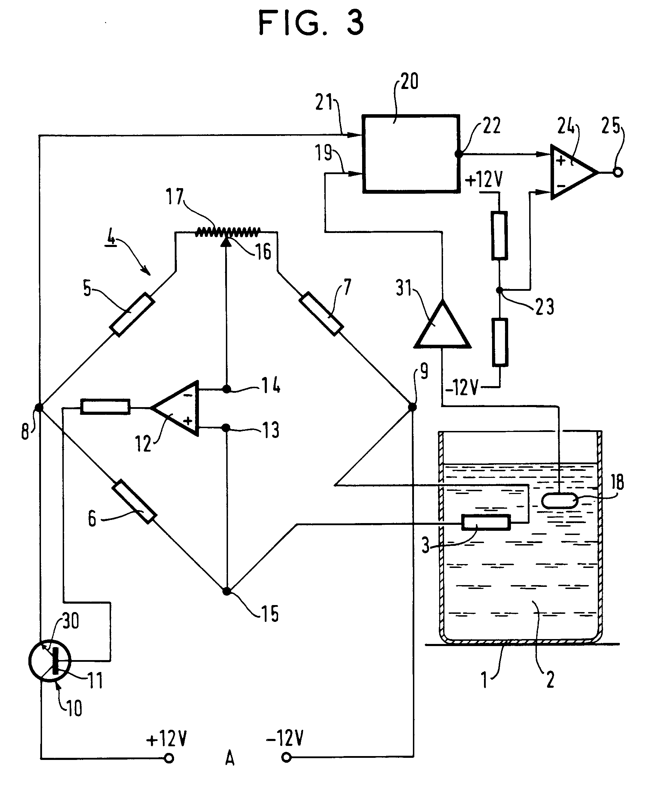

La figure 3 montre un dispositif très voisin de celui de la figure 2. Ici, on ne souhaite pas mesurer le niveau du liquide 2 mais seulement savoir si le liquide atteint ou non un niveau minimal déterminé.

Ainsi, l'élément résistif 3 est disposé horizontalement à un niveau déterminé et la sortie 22 du circuit additionneur 20 est comparée à une tension de seuil en 23 par un comparateur 24 dont le signal de sortie en 25 est un signal binaire + 12 volts ou - 12 volts selon que le détecteur est ou non dans le liquide 1.

Enfin, la figure 4 illustre un dispositif de mesure de débit dans une conduite 31 parcourue par un fluide 32.

A cet effet, l'élément résistif 3 est disposé dans la conduite et relié, comme dans les figures précédentes aux points 9 et 15 du montage électrique.

En fonction du débit du fluide 32, l'élément résistif 3 a des déperditions calorifiques plus ou moins grandes qui se traduisent par des variations de tension du point 8.

Pour tenir compte des variations éventuelles de la température du fluide 32, on peut également disposer une sonde de température 18 insérée dans un circuit de compensation identique à celui de la figure 2.

Le signal de sortie 22 est dirigé vers un appareil gradué directement en débit, au lieu d'un appareil gradué en hauteur de niveau comme dans le cas de la figure 2.

Ainsi le montage électrique selon l'invention se prête à de nombreuses applications, il est simple, de faible coût, il peut être monté sur un circuit imprimé, il a un encombrement très faible et permet des mesures analogiques.

**Revendications**

1. Montage électrique pour élaborer un signal électrique analogique, fonction de la déperdition calorifique d'un élément résistif (3), caractérisé en ce que ledit élément résistif (3) est monté dans un pont de Wheatstone (4) alimenté dans une des ses diagonales par l'intermédiaire d'un transistor (10) dont la base (11) est reliée à la sortie d'un amplificateur (12) à grand gain qui a ses entrées (13, 14) reliées à l'autre diagonale (15, 16) du pont (4), ledit pont comportant un potentiomètre de réglage (17), la tension d'émetteur (30) dudit transistor (10) alimentant le pont et constituant ledit signal.

2. Dispositif de mesure continue du niveau H d'un liquide (2) dans une enceinte (1), mettant en applicationn le montage selon la revendication 1, caractérisé en ce que ledit élément résistif (3) est de forme allongée et est disposé verticalement dans ladite enceinte (2), le niveau maximal du liquide dans l'enceinte ne dépassant pas l'extrémité supérieure dudit élément (3);

3. Dispositif de mesure selon la revendication 2, caractérisé en ce qu'une sonde de température (18) est disposée à proximité dudit élément résistif (3) et fournit une tension (19) proportionnelle à sa température qui est envoyée, ainsi que la tension de l'émetteur (30) dudit transistor (10), sur un additionneur (20) pour effectuer une compensation d'une dérive éventuelle de température.

4. Dispositif pour déliver un signal binaire (25) indiquant qu'un liquide (2) dans une enceinte (1) atteint ou dépasse un niveau déterminé ou ne l'atteint pas, mettant en application le montage selon la revendication 1, caractérisé en ce que ledit élément résistif (3) est placé horizontalement dans ladite enceinte (1) à un niveau déterminé, et en ce que ladite tension d'émetteur (30) dudit transistor (10) est comparée à un seuil (23) dans un comparateur (24) fournissant en sortie (25) ledit signal binaire.

5. Dispositif selon la revendication 4, caractérisé en ce qu'une sonde de température (18) est disposée à proximité dudit élément résistif et fournit une tension (19) proportionnelle à sa température, qui est envoyée, ainsi que la tension de l'émetteur (30) dudit transistor (10) sur un additionneur (20) pour effectuer une compensation d'une dérive éventuellement de température, la sortie (22) dudit additionneur étant envoyée vers ledit comparateur (24).

6. Dispositif de mesure du débit d'un fluide dans une conduite (31), mettant en application le montage selon la revendication 1, caractérisé en ce que ledit élément résistif (3) est disposé dans la veine fluide (32) parcourant la conduite (31).

7. Dispositif selon la revendication 6, caractérisé en ce qu'une sonde de température (18) est disposée à proximité dudit élément résistif (3) et fournit une tension (19) proportionnelle à sa température qui est envoyée, ainsi que la tension de l'émetteur (30) dudit transistor (10) sur un additionneur (20) pour effectuer une compensation d'une dérive éventuelle de température.

## FIG. 1

17
4
5
16
7
14
9
8
12
13
6
3
30
11
15
10

+12V    A    -12V

## FIG. 4

31

3    32    18

# FIG. 2

# FIG. 3